(19) Europäisches Patentamt / European Patent Office / Office européen des brevets

(11) **EP 1 683 010 B1**

(12) **EUROPEAN PATENT SPECIFICATION**

(45) Date of publication and mention
of the grant of the patent:
**30.12.2009 Bulletin 2009/53**

(51) Int Cl.:
**G06F 9/45** (2006.01)

(21) Application number: **04810519.1**

(22) Date of filing: **05.11.2004**

(86) International application number:
**PCT/US2004/037161**

(87) International publication number:
**WO 2005/050445 (02.06.2005 Gazette 2005/22)**

(54) **AN APPARATUS AND METHOD FOR AN AUTOMATIC THREAD-PARTITION COMPILER**

VORRICHTUNG UND VERFAHREN FÜR EINEN AUTOMATISCHEN THREAD-PARTITION COMPILER

APPAREIL ET METHODE ASSOCIES A UN COMPILATEUR OPÉRANT UNE PARTITION AUTOMATIQUE EN PROCESSUS

(84) Designated Contracting States:
**AT BE BG CH CY CZ DE DK EE ES FI FR GB GR HU IE IS IT LI LU MC NL PL PT RO SE SI SK TR**

(30) Priority: **14.11.2003 US 714198**

(43) Date of publication of application:
**26.07.2006 Bulletin 2006/30**

(73) Proprietor: **Intel Corporation**
**Santa Clara, CA 95052 (US)**

(72) Inventors:
• **LI, Long,**
**Shanghai 200336 (CN)**
• **SEED, Cotton**
**Cambridge, MA 02139 (US)**
• **HUANG, Bo**
**Shanghai 200063 (CN)**
• **HARRISON, William, III**
**Chestnut, MA 02467 (US)**
• **DAI, Jinquan**
**Shanghai 201600 (CN)**

(74) Representative: **Beresford, Keith Denis Lewis**
**Beresford & Co.**
**16 High Holborn**
**London**
**WC1V 6BX (GB)**

(56) References cited:
• **MICHAEL WOLFE: "Multiprocessor Synchronization for Concurrent Loops" IEEE Software USA, vol. 5, no. 1, January 1988 (1988-01), pages 34-42, XP001206894 ISSN: 0740-7459**
• **HWANG R-Y ET AL: "Intelligent code migration technique for synchronisation operations on a multiprocessor" IEE PROCEEDINGS: COMPUTERS AND DIGITAL TECHNIQUES, IEE, GB, vol. 142, no. 2, 1 March 1995 (1995-03-01), pages 107-16, XP006003851 ISSN: 1350-2387**
• **MICHAEL WOLFE: "Optimizing Supercompilers for Supercomputers" 1989, MIT PRESS , LONDON , XP002335425 page 78, paragraph 4 - page 79, last paragraph**
• **MATTHEW ADILETTA, DONALD HOOPER AND MYLES WILDE: "Packet over SONET: Achieving 10 Gigabit/sec Packet Processing with an IXP2800" Intel Technology Journal Intel Corp USA, vol. 6, no. 3, August 2002 (2002-08), pages 29-39, XP002335422 ISSN: 1535-864X**
• **NOVILLO D ET AL: "Concurrent SSA form in the presence of mutual exclusion" PARALLEL PROCESSING, 1998. PROCEEDINGS. 1998 INTERNATIONAL CONFERENCE ON MINNEAPOLIS, MN, USA 10-14 AUG. 1998, LOS ALAMITOS, CA, USA,IEEE COMPUT. SOC, US, 10 August 1998 (1998-08-10), pages 356-364, XP010298347 ISBN: 0-8186-8650-2**

**(Cont. next page)**

- **JENS KNOOP, OLIVER RÜTHING AND BERNHARD STEFFEN: "Optimal code motion: theory and practice" ACM Transactions on Programming Languages and Systems USA, vol. 16, no. 4, July 1994 (1994-07), pages 1117-1155, XP002335819 ISSN: 0164-0925**

- **STEVEN S MUCHNICK: "Control-flow analysis" ADVANCED COMPILER DESIGN AND IMPLEMENTATION, 1985, pages 169-172,191, XP002302474**

**Description**

FIELD OF THE INVENTION

One or more embodiments of the invention relate generally to the field of multi-thread micro-architectures. More particularly, one or more of the embodiments of the invention relates to a method and apparatus for an automatic thread-partition compiler.

BACKGROUND OF THE INVENTION

Hardware multi-threading is becoming a practical technique in the modem processor design. Several multi-threaded processors have already been announced in the industry or are in production in the areas of high-perfonnance computing, multi-media processing and network packet processing. The Internet exchange processor (IXP) series, which belong to the Intel® Internet Exchange™ Architecture (IXA) Network Processor (NP) family, are such examples of multi-threaded processors. In general, each IXP includes a highly parallel, multi-threaded architecture in order to meet the high-performance requirements of packet processing.

Generally, NPs are specifically designed to perform packet processing. Conventionally, NPs may be used to perform such packet processing as a core clement of high-speed communication routers. Generally, traditional network applications for performing packet processing are conventionally coded using sequential semantics. Generally, such network applications are coded to use a unit of packet processing (a packet processing stage (PPS)) that runs forever. Hence, when a new packet arrives, the PPS performs a series of tasks (e.g., receipt of the packet, routing table look-up and enqueuing of the packet). Consequently, a PPS is usually expressed as an infinite loop (or a PPS loop) with each iteration processing a different packet.

Hence, in spite of the highly parallel, multi-threaded architecture provided by modem NPs, failure to exploit such parallelism results in highly unused processor resources. Undoubtedly, poor performance gain can be achieved if a sequential application program runs on top of the advance multi-threaded architectures provided by NPs. In order to achieve high-performance, programmers have tried to fully utilize the muhi-threaded architecture provided by NPs by exploiting the thread level parallelism of sequential applications. Unfortunately, manually threaded partitioning is a challenge for most programmers.

The following documents relate to compiling programs for parallel machines by partitioning the code, or to code motion;

MICHAEL WOLFE: "Multiprocessor Synchronization for Concurrent Loops"IEEE Software USA, vol. 5, no. 1, January 1998 (1988-01), pages 34-42, XP002335423 ISSN: 0740-7459.
STEVEN S. MUCHNICK: "Control-flow analaysis" ADVANCED COMPILTER DESIGN AND IMPLEMENTATION, 1985, pages 169-172,191, XP002302474.
MICHEAL WOLFE: "Optimizing Supercompilers for Supercomputers" 1989, MIT PRESS, LONDON, XP002335425.
MATTHEW ADILETTA, DONALD HOOPER AND MYLES WILDE: "Packet over SONET: Achieving 10 Gigabit/see Packet processing with an IXP2800" Intel Technology Journal Intel Corp USA, vol. 6, no. 3, August 2002 (2002-08), pages 29-39, XP002335422 ISSN: 1535-864X.
NOVILLO D ET AL: "Concurrent SSA form in the presence of mutual exclusion" PARALLEL PROCESSING, 1998. PROCEEDINGS. 1998 INTERNATIONAL CONFERENCE ON MINNEAPOLIS, MN, USA 10-14 AUG. 1998, LOS ALAMITOS, CA, USA, IEEE COMPUT. SOC, US, 10 August 1998 (1998-08-10), pages 356-364, XP010298347 ISBN: 0-8186-8650-2.
JENS SNOOP, OLIVER RUTHING AND BERNHARD STIFFER: "Optimal code motion: theory and practice" ACM Transactions on Programming Languages and Systems USA, vol. 16, no 4, July 1994 (1994-07), pages 1117-1155, XP002335819 ISSN: 0164-0925.

Aspects of the invention arc set out in the appended independent claims.

BRIEF DESCRIPTION OF THE DRAWINGS

The various embodiments of the present invention are illustrated by way of example, and not by way of limitation, in the figures of the accompanying drawings and in which:

FIG. 1 is a block diagram illustrating a computer system having a thread partition compiler, in accordance with one embodiment of the invention.

FIGS. 2A-2C depict transformation of a sequential packet processing stage (PPS) into two application program threads, in accordance with one embodiment of the invention.

FIGS. 3A-3B illustrate transformation of a sequence of a sequential PPS loop, including critical sections surrounded by one or more boundary instructions, in accordance with one embodiment of the invention.

FIG. 4 is a block diagram illustrating a processor, including a multi-threaded architecture, in accordance with one embodiment of the invention.

FIG. 5 is a block diagram illustrating a method for thread partitioning a loop body of a sequential application program, in accordance with one embodiment of the invention.

FIGS. 6A-6B are diagrams illustrating formation of a control flow graph (CFG loop), in accordance with one embodiment of the invention.

FIG. 7 is a flowchart illustrating a method for modifying a CFG loop enclosing identified critical sections within pairs of boundary instructions, in accordance with one embodiment of the invention.

FIG. 8 is a flowchart illustrating a method for reducing an amount of instructions between corresponding pairs of boundary instructions, in accordance with one embodiment of the invention.

FIG. 9 is a flowchart illustrating a method for hoisting motion candidate instructions, in accordance with one embodiment of the invention.

FIG. 10 is a block diagram illustrating a flow dependence graph, in accordance with one embodiment of the invention.

FIG. 11 is a flowchart illustrating a method for hoisting motion candidate instructions, in accordance with one embodiment of the invention.

FIG. 12 is a flowchart illustrating a method for sinking motion candidate instructions, in accordance with one embodiment of the invention.

FIG. 13 is a flowchart illustrating a method for sinking motion candidate instructions, in accordance with one embodiment of the invention.

FIG. 14 is a flowchart illustrating a method for hoisting motion candidate instructions, in accordance with one embodiment of the invention.

FIGS. 15A and 15B are block diagrams, illustrating computation of motion candidates, in accordance with one embodiment of the invention.

FIG. 16 is a flowchart illustrating a method for partitioning a sequential application program into a plurality of application program threads for concurrent execution of the program threads, in accordance with one embodiment of the invention.

## DETAILED DESCRIPTION

A method and apparatus for an automatic thread-partition compiler are described. In one embodiment, the method includes the transformation of a sequential application program into a plurality of application program threads. Once partitioned, the plurality of application program threads are concurrently executed as respective threads of a multi-threaded architecture. Hence, a performance improvement of the parallel multi-threaded architecture is achieved by hiding memory access latency through or by overlapping memory access with computations or with other memory accesses.

In the following description, certain terminology is used to describe features of the invention. For example, the term "logic" is representative of hardware and/or software configured to perform one or more functions. For instance, examples of "hardware" include, but are not limited or restricted to, an integrated circuit, a finite state machine or even combinatorial logical. The integrated circuit may take the form of a processor such as a microprocessor, application specific integrated circuit, a digital signal processor, a micro-controller, or the like.

An example of "software" includes executable code in the form of an application, an applet, a routine or even a series of instructions. The software may be stored in any type of computer or machine readable medium such as a programmable electronic circuit, a semiconductor memory device inclusive of volatile memory (e.g., random access memory, etc.) and/or non-volatile memory (e.g., any type of read-only memory "ROM," flash memory), a floppy diskette, an optical disk (*e.g.*, compact disk or digital video disk "DVD"), a hard drive disk, tape, or the like.

In one embodiment, the present invention may be provided as an article of manufacture which may include a machine or computer-readable medium having stored thereon instructions which may be used to program a computer (or other electronic devices) to perform a process according to one embodiment of the present invention. The computer-readable medium may include, but is not limited to, floppy diskettes, optical disks, Compact Disc, Read-Only Memory (CD-ROMs), and ma gneto-optical disks, Read-Only Memory (ROMs), Random Access Memory (RAMs), Erasable Programmable Read-Only Memory (EPROMs), Electrically Erasable Programmable Read-Only Memory (EEPROMs), magnetic or optical cards, flash memory, or the like.

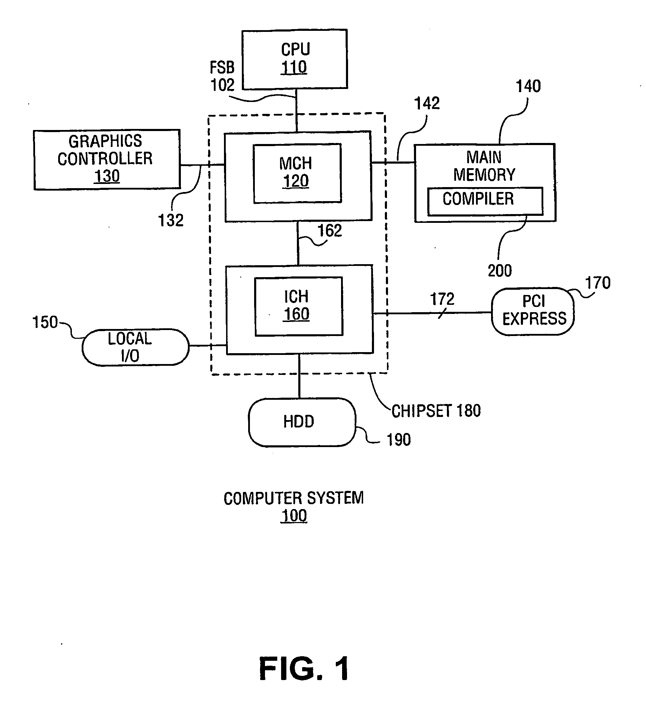

FIG. 1 is a block diagram illustrating a computer system 100 including a thread-partition compiler 200, in accordance with one embodiment of the invention. As illustrated, computer system 100 includes a CPU 110, memory 140 and graphics controller 130 coupled to memory controller hub (MCH) 120. As described herein, MCH 120 may be referred to as a north bridge and, in one embodiment, as a memory controller. In addition, computer system 100 includes I/O (input/output) controller hub (ICH) 160. As described herein ICH 160 may be referred to as a south bridge or an I/O controller. South bridge, or ICH 160, is coupled to local I/O 150 and hard disk drive devices (HDD) 190.

In the embodiment illustrated, ICH 160 is coupled to I/O bus 172 which couples a plurality of I/O devices, such as, for example, PCI or peripheral component interconnect (PCI) devices 170, including PCI-express, PCI-X, third generation I/O (3GIO), or other like interconnect protocol. Collectively, MCH 120 and ICH 160 are preferred to as chipset 180. As is described herein, the term "chipset" is used in a manner well known to those skilled in the art to describe, collectively, the various devices coupled to CPU 110 to perform desired system functionality. In one embodiment, main memory 140 is volatile memory including, but not limited to, random access memory (RAM), synchronous RAM (SRAM), dynamic RAM (DRAM), synchronous DRAM (SDRAM), double data rate (DDR) SDRAM (DDR SDRAM), Rambus DRAM (RDRAM), direct RDRAM (DRDRAM), or the like.

## System

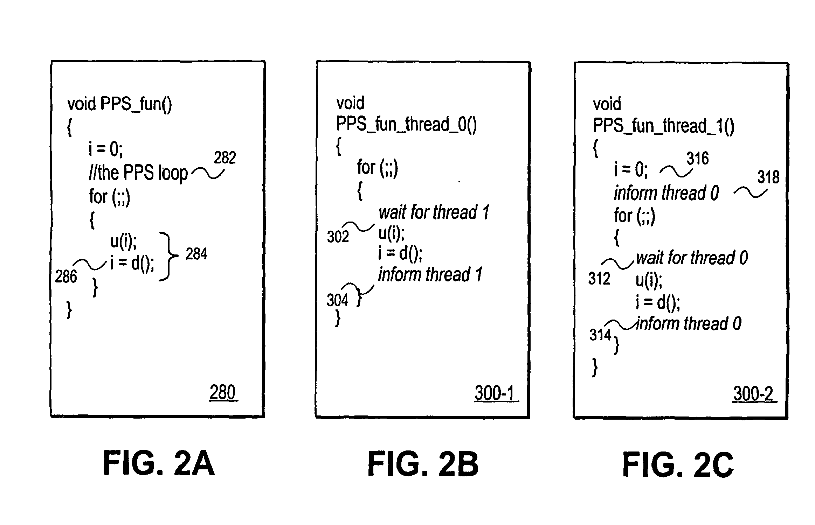

In contrast to conventional computer systems, computer system 100 includes thread partitioning compiler 200 for partitioning a sequential application program into a plurality of application program threads ("thread-partitioning")- Hence, compiler 200 may bridge the gap between the multi-threaded architecture of network processors and the sequential programming model used to code conventional network applications. One way to address this problem is to exploit the thread level parallelism of sequential applications. Unfortunately, manually thread-partitioning a sequential application is a challenge for most programmers- In one embodiment, thread-partition compiler 200 is provided for automatically thread-partitioning a sequential network application, as illustrated in FIG. 2A, into a plurality of program threads, as illustrated in FIGS. 2B-2C.

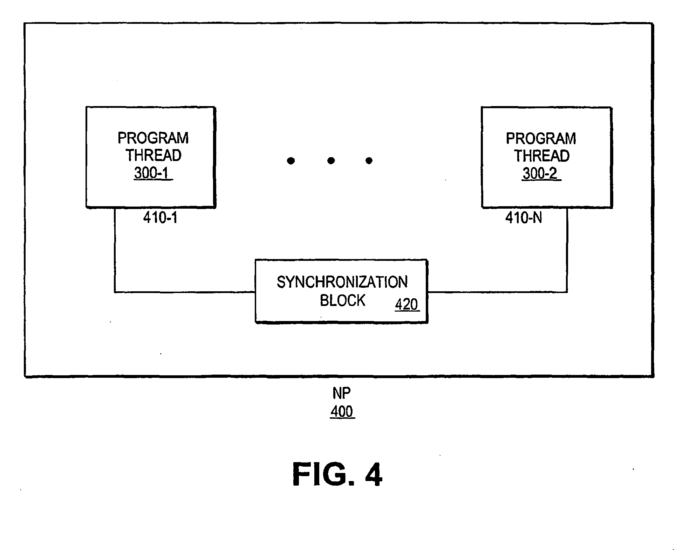

Referring to PIG. 2A, a sequential packet processing stage (PPS) 280 of a sequential network application is illustrated. In one embodiment, PPS 280 is transformed into a first program thread 300-1 (FIG. 2B) and a second program thread 300-2 (FIG. 2C) for execution within, for example, a multi-threaded network processor 400 of FIG. 4. In one embodiment, performance of a multi-threaded architecture is improved by transforming a traditional network application, as illustrated with reference to FIG. 2A, into multiple program-threads, as illustrated with reference to FIGS. 2B-2C.

In one embodiment, a sequential PPS infinite loop 282 is transformed into multiple program-threads (300-1, 300-2) with optimized synchronization between the program-threads to achieve improved parallel execution. Unfortunately, sequential PPS loops (e.g., 282) include the sequential execution of dependent operations including, for example, loop carried variables.

In one embodiments, a loop carried variable includes two properties: (i) the loop carried variable is alive on the back edge of a PPS loop of the sequential PPS; and (ii) the value of the loop carried variable is changed in the PPS loop body. Representatively, the variable i 286 represents a loop carried variable within a critical section 284 of PPS loop 282, as is described in further detail below.

In one embodiment, critical sections of a sequential PPS arc identified by surrounding boundary instructions (302 and 304), as illustrated in FIG. 2B and FIG. 2C. Representatively, sequential PPS 280 is thread-partitioned into two program-threads (300-1 and 300-2). Once partitioned, execution of the programs threads begins with execution of thread 300-2 (thread one), wherein the variables i 282 is initialized by, for example, an input program. Once initialized, thread-partition 300-1 (thread zero) is notified to begin execution. Once execution of the critical section is complete, thread 300-1 informs thread 300-2. Hence, program-thread 300-1 performs iterations 0, 2, 4,..., N of sequential PPS loop 282, whereas program thread 300-2 performs iterations 1, 3, 5,..., M of the PPS loop 282

In one embodiment, a level of parallelism is increased by reducing the amount of instructions contained within critical sections. Accordingly, by minimizing critical section code, the amount of code fragments requiring execution in strict sequential thread order is minimized. Once loop carried variables and dependent operations are detected, critical sections are demarcated by boundary instructions. Hence, in one embodiment, preparation work for performing thread-partitioning includes identification of all loop carried variables. In one embodiment, the identification of loop carried variables is performed by an input program and therefore additional details regarding detection of loop carried variables are omitted to avoid obscuring the details of the embodiments of the invention.

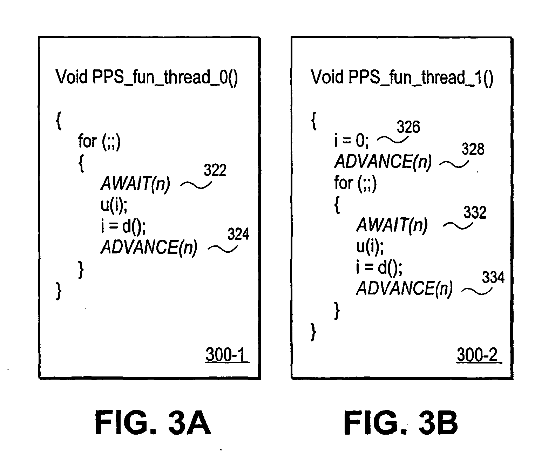

In one embodiment, thread-partitioning compiler 200 (FIG. 1) maintains sequential semantics among program-threads of the sequential application program. In one embodiment, thread-partition compiler introduces synchronization between thread partitions that is sufficient to enforce dependencies between iterations of program-thread loops. In one embodiment, AWAIT operations and ADVANCE operations are provided to perform synchronization, as well as to ensure sequential thread order execution of program-thread-partition loops. Hence, as illustrated with reference to FIGS. 3A-3B, each loop carried variable is assigned within a unique critical section to synchronize access to the loop carried variables in order to form program-thread 300-1 (FIG. 3A) program-thread 300-2 (FIG. 3B).

In the program representations illustrated in FIGS. 3A-3B, a critical section is denoted as N and starts with a special AWAIT(N) operation and ends with an ADVANCE(N) operation. As described herein, an AWAIT instruction refers to an operation that suspends the execution of a current thread until informed by a previous thread on the processing chain to begin execution. As described herein, the term ADVANCE operation refers to operations that notify the next thread on the processing chain to enter a critical section and begin execution thereof. In one embodiment, the boundary instructions (i.e., AWAIT and ADVANCE instructions) synchronize access to loop-carried variables in order to perform execution in strict sequential thread order.

FIG. 4 is a block diagram illustrating a multi-processor, such as, for example, a network processor (NP) 100 configured to provide a multi-threaded architecture. In one embodiment, NP 400 executes program-thread 300-1 and program thread 300-2 of FIGS. 3A and 3B. In one embodiment, synchronization block 420 performs communication between corresponding ADVANCE and AWAIT instructions. Representatively, program-threads 300-1 and 300-2 are executed in parallel by micro-architecture threads 410 (410-1,..., 410-N). Hence, NP 100 executes thread partitions 300-1 and 300-2 formed from a sequential application program. In one embodiment, memory access can be performed concurrently with other operations in order to hide memory access lateney by performing thread execution during memory access.

In one embodiment, network processor 400 is, for example, implemented within processor 100 of FIG. 1, such that processor 100 of FIG. 1 implements a multi-threaded micro-architecture. In one embodiment, a general framework of automatic thread partitioning for traditional network packet processing applications may be performed on any computer architecture, including the following features (1) provides a multi- threaded architecture; (2) provides thread local storage access by each thread exclusively, as well as global storage access by all threads; and (3) provides inter-thread communication and synchronization mechanism signals. Procedural methods for implementing embodiments of the invention are now described.

Operation

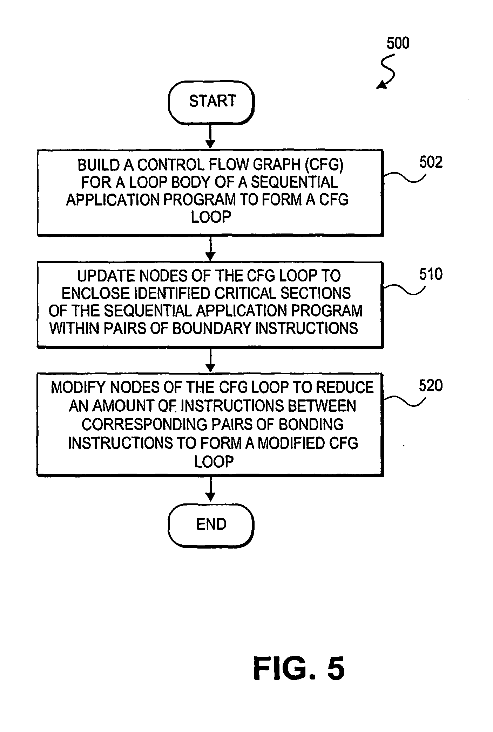

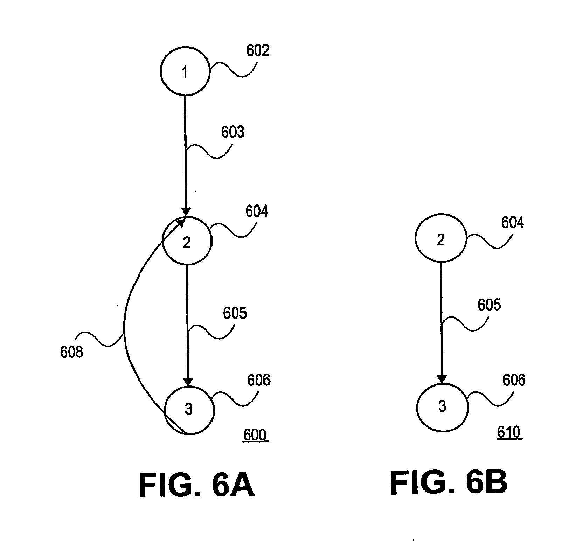

FIG. 5 is a flowchart illustrating a method 500 for thread partitioning a sequential application program, in accordance with one embodiment of the invention. At process block 502, a control flow graph CFG is built for a loop body of a sequential application program. As described herein, a CFG is a graph representing the flow of control of the program, where each vertex represents a basic block, and each edge shows the potential flow of control between basic blocks. A control flow graph has a unique source node (entry). In one embodiment, the formation of the CFG as illustrated with reference to FIGS. 6A and 6B.

As illustrated in FIG. 6A, CFG 600 for sequential application 600 includes node 602, node 604 and node 606, as well as back-edge 608. In one embodiment, thread-partitioning is primarily focused on identified PPS loops of a sequential application program. Representatively, a PPS loop body of CFG 600 is comprised of node 604, node 606 and back-edge 608. In one embodiment, a CFG 610 is formed for the loop body, as illustrated in FIG. 6B, by removing node 602, edge 603 and back-edge 608. In one embodiment, CFG 610 is used to enable transformation of a PPS loop body of a sequential application program to minimize critical sections.

At process block 510, nodes of The CFG are updated to enclose identified critical sections of the sequential application program within pairs of boundary instructions. In one embodiment a pair of AWAIT and ADVANCE operations are initially inserted at a Lop 604 and a bottom 606 of a CFG 610 of FIG. 6B. In one embodiment, AWAIT and ADVANCE operations are viewed as the boundaries of a critical section. At process block 520, nodes of the CFG are modified to reduce an amount of instructions between corresponding pairs of boundary instructions to form a modified CFG.

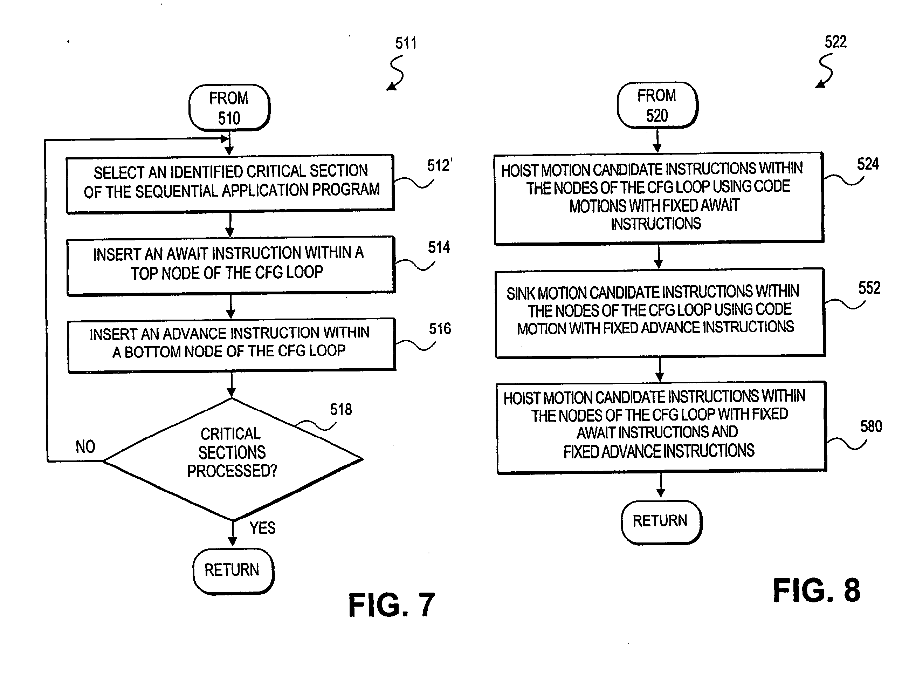

FIG. 7 is a flowchart illustrating a method 511 for updating nodes of the CFG of process block 510 of FIG. 5, in accordance with one embodiment of the invention. At process block 512, an identified critical section of the sequential application program is selected. In one embodiment, critical sections of the sequential application program are identified by an input program. As described herein, each identified critical section corresponds to a loop carried variable. In one embodiment, each critical section initially contains all instructions in the PPS loop. Hence, the scope of initial critical section(s) is the whole PPS loop body. Representatively, at process block 511, an AWAIT instruction is inserted within a top node of the CFG. Likewise, at process block 516, an ADVANCE instruction is inserted within a bottom node of the CFG.

Accordingly, at process block 518, process blocks 514-516 are repeated for each identified critical section of the sequential application program. For example, as illustrated with reference to FIG. 6B, AWAIT operations are inserted within node 601, whereas ADVANCE operations are inserted in node 606. However, the sequential thread order execution requirement of operations between or within critical sections, reduces the amount of parallel execution performed as the amount of operations within critical sections increases. In one embodiment, the amount of code contained within critical sections is minimized to increase parallel execution of program-threads. In one embodiment, code fragments requiting execution in strict sequential thread order are minimized using dataflow analysis, as well as code motion

Accordingly, once each pair of AWAIT and ADVANCE operations are inserted into CFG loop 610 for all identified critical sections of the sequential application program, code motion is performed on the CFG to reduce the amount of operations contained within critical sections identified by AWAIT and ADVANCE operations. However, those skilled in the art recognize that code minimization within critical sections may be performed using other data analysis or graph theory techniques, while remaining within the embodiments of the described invention.

As described herein, dataflow analysis is not limited to simply computing definitions and uses of variables (dataflow). Dataflow analysis provides a technique for computing facts about paths through programs or procedures. A prerequisite to the concept of dataflow analysis is the control flow graph CFG or simply a flow graph, for example as illustrated with reference to FIG. 6A. A CFG is a directed graph that captures control flow and a part of a program. For example, a CFG may represent a procedure sized program fragment. As described herein, CFG, nodes are basic blocks (sections of code always executed in order) and the edges represent possible flow or control between basic blocks. For example, as illustrated with reference to FIG. 6A, control flow graph 600 is comprised of nodes 602-606, as well as edges 603, 605 and back-edge 608.

As described herein, code motion is a technique far inter-block and intra-block instruction recordering (hoisting/sinking). In one embodiment, code motion moves irrelevant code out of identified critical sections in order to minimize the amount of instructions/operations contained therein. To perform the inter-block and intra-block instruction reordering, code motion initially identifies motion candidate instructions. In one embodiment, motion candidate instructions are identified using dataflow analysis. Representatively, a series of dataflow problems are solved to carryout both hoisting and sinking of identified motion candidate instructions.

FIG. 8 is a flowchart of a method 522 for modifying nodes of the CFG loop of process block 520 of FIG. 5, in accordance with one embodiment of the invention. At process block 524, motion candidate instructions are hoisted within the nodes of the CFG using code motion with fixed AWAIT boundary instructions. At process block 552, motion candidate instructions are sunk within the nodes of the CFG using code motion with fixed ADVANCH operatious. At process block 580, motion candidate instructions are hoisted within the nodes of the CFG with fixed AWAIT operations and fixed ADVANCE operations. In one embodiment, method 522 represents three-phase code motion to limit operations or reduce the amount of operations bounded by AWAIT and ADVANCE operations, in accordance with one embodiment of the invention.

In one embodiment, a three-phase code motion is used to minimize the amount of operations within identified critical sections of thread-partition loops. Representatively, the first two phases of code motion perform code motion with the AWAIT operations fixed and ADVANCE operations fixed, respectively. As a result, ADVANCE operations are placed into the optimal basic block and AWAIT operations are placed into the optimal basic block. In this embodiment, the last phase of code motion performs code motion with both AWAIT operations and ADVANCE operations fixed. Representatively, this final phase of code motion moves irrelevant instructions out of critical sections, while placing both AWAIT and ADVANCE operations at optimal positions.

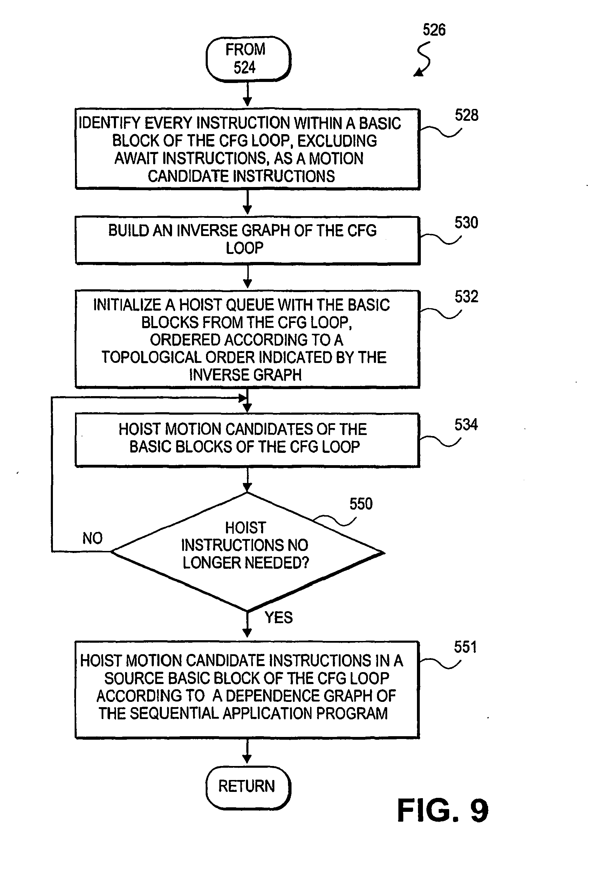

FIG. 9 is a flowchart illustrating a method 526 for hoisting instructions with fixed AWAIT operations of process block 524 of FIG. 8, in accordance with one embodiment of the invention. At process block 528, every instruction within a basic block of the CFG is identified as a motion candidate instruction, excluding A WAIT operations. Hence, AWAIT operations are not identified as motion candidate instructions. At process block 530, an inverse graph of the CFG is built. At process block 532, a hoist queue is initialized with basic blocks from the CFG. In one embodiment, the basic blocks arc ordered according to a topological order indicated by the inverse graph.

At process block 550, it is determined whether hoist instructions are on longer detected. Until such is the case, motion candidate instruction; are hoisted within the basic blocks of the CFG at process block 551. At process block 551, instructions in a source basic block of the CFG are hoisted according to a dependence graph of the sequential application program. As descried herein, a dependence graph is constructed to illustrate data dependence of a PPS loop body to provide information about data dependence. Hence, hoisting or sinking any motion candidate instructions cannot violate data dependence on the original program. As descried herein, a dependence graph illustrates data dependence between nodes and control dependence between nodes.

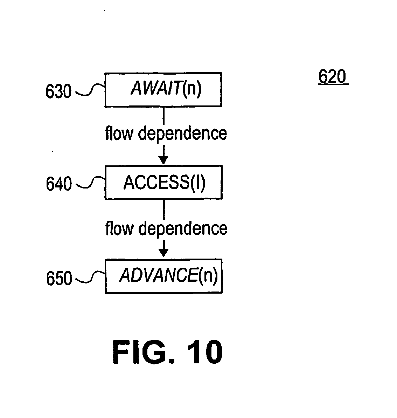

As illustrated with reference to FIG. 10, flow dependence graph 620 illustrates the flow dependence between A WAIT operations 634, accesses operations 640 to within a critical section, such as, for example, loop carried variable i, as well as flow dependence relationship between accesses to loop carried variable i and ADVANCE operations 650. Hence, flow dependence graph 620 ensures that access to loop carried variable i is synchronized by critical section n to enable sequential thread order execution of loop carried variable i.

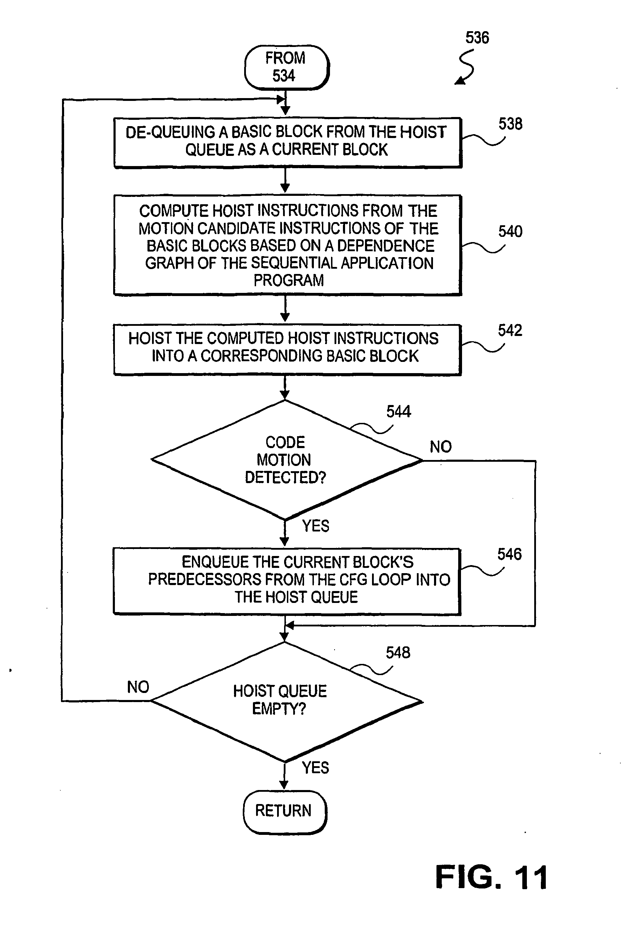

FIG. 11 is a flowchart illustrating a method 536 for hoisting detected hoist instructions within the basic blocks of the CFG of process block 531 of FIG. 9, in accordance with one embodiment of the invention. At process block 538, a basic block is de-queued from the hoist queue as a current block. At process block 540, hoist instructions are computed from motion candidate instructions of the basic blocks based on a dependence graph of the sequential application program.

At process block 542, the computed hoist instructions are hoisted into a corresponding basic block into which the computed hoist instruction may be placed. At process block 544, it is determined whether additional code motion is detected, such as for example, a change detected by hoisting of the computed hoist instructions. When a change is detected, at process block 544, the current block's predecessors from the CFG are enqueued into the hoist queue at process block 546. At process block 548, process blocks 538-516 are repeated until the hoist queue is empty.

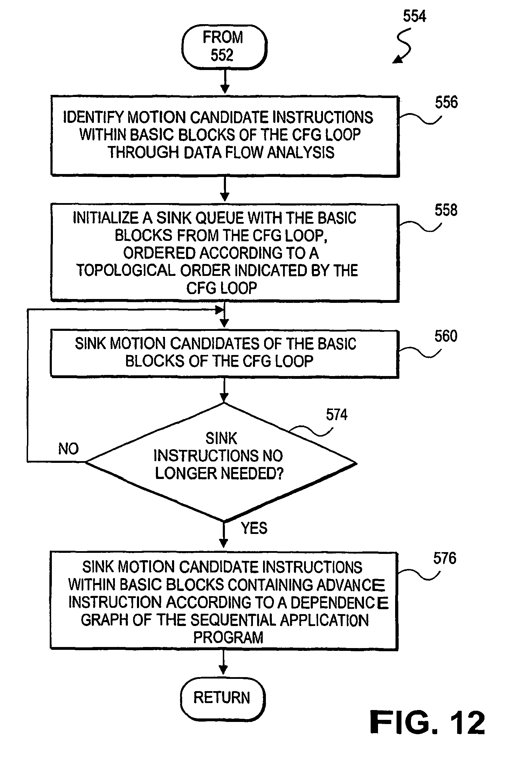

FIG. 12 is a flowchart illustrating a method 554 for sinking detected sink instructions with fixed ADVANCE instructions of process block 552 of FIG. 11, in accordance with one embodiment of the invention. At process block 556, motion candidate instructions within the basic blocks of the CFG are identified through dataflow analysis, excluding ADVANCE operations. As referred to above, dataflow analysis identifies hoist instructions, as well as sink instructions, by solving a series of dataflow equations. Dataflow equations arc generally formed to establish the truth or falsity of path predicates.

Path predicates are statements about what happens during program execution along a particular control path quantified over all such paths, either universally or existentially. As described herein, a control flow path is a path in the CFG. For example, a reaching definitions problem asks for each control flow node n and each variable definition d, whether d might reach n, where reach means the definition gives a value to a variable and the variable is not then redefined. For example, a path predicate may be expressed according to the following equation.

$$\text{REACHDEF}(\text{node } n, \text{definition } d) =$$
$$\text{there exists a path } p, \text{from } start \text{ to } n, \text{such that}$$
$$d \text{ occurs on } p, \text{and no definition occurs after } d \qquad (1)$$

As described herein, dataflow equations formulate answers to a path predicate as a system of equations describing the solution at each node. That is, for each node in the CFG, we are able to say yes or no regarding whether the definition of interest reaches the node. For example, consider any single three address code statement in the form of:

$$d_i : x := y \text{ op } z \qquad (2)$$

This program statement defines the variable x. Accordingly, if such a statement were contained within the node of a control flow graph, as described herein, the node (N) of the control flow graph containing the program statement is set to generate definition $d_i$ and kill any other definitions within prior program statements that define x. When analyzed in terms of sets, the following relationships are established:

$$\text{gen}[N] = (d_i)$$

$$\text{kill}[N] = Dx - (d_i)$$

$$(3)$$

where dx refers to all other definitions of x in the program.

Accordingly, considering a basic block N, figuring out which definitions reach the basic block n requires analysis of predecessors of basic block N. For example, letting the symbol < represent the predecessor relation on two nodes in a CFG, we say that p is a predecessor of b if there is an edge from p -> b in the control flow graph. Accordingly, based on the predecessor relation, the following dataflow equations are generated.

$$in[B] = \bigcup_{P \prec B} out[P] \qquad (4)$$

$$out[B] = gen[B] \cup (in[B] - kill[B]) \qquad (5)$$

Accordingly, in order to compute motion candidates through dataflow analysis and in accordance with one embodiment of the invention, for each instruction i the following dataflow equations can be described as follows:

$$GEN[i] = \{N \mid AWAIT(N) \text{ if } i \text{ is AWAIT}\} \qquad (6)$$

$$KILL[i] = \{N \mid AWAIT(N) \text{ if } i \text{ is ADVANCE}\} \qquad (7)$$

$$IN[i] = \bigcup_{p \in Pred(i)} OUT[p] \qquad (8)$$

$$OUT[i] = GEN[i] \cup (IN[i] - KILL[i]) \qquad (9)$$

Accordingly, in one embodiment, motion candidates are computed as follows: (1) AWAITs are identified as motion candidates; (2) an instruction i is a candidate only if IN[i] is not equal to an empty set (0). In other words, for each instruction i, a bit vector is generated according to the dataflow equations in order to determine whether the instruction i is to be identified as a motion candidate. In the embodiment described. ADVANCE operations are not identified as motion candidates.

Referring again to FIG. 12, once motion candidates are identified, at process block 558, a sink queue is initialized with basic blocks of the CFG. In one embodiment, the basis blocks are ordered within the sink queue based on a topological order in the CFG. At process block 560, motion candidate instructions are sunk among the basing blocks until sinking instructions are no longer detected at process block 574. At process block 576, motion candidate instructions are sunk within basic blocks that contain ADVANCE operations according to the dependence graph of the sequential application program.

In other words, the detection and sinking of sink instructions, as well as hoist instructions, should not violate any data dependencies or, for example, control dependencies, indicated by a dependence graph of the sequential application program. In other words, compliance with a dependence graph ensures that program-threads generated from the sequential application program maintain sequential semantics. In one embodiment program-threads maintain sequential semantics of the original program and enforce dependencies between program-thread iterations corresponding to a PPS loop of the sequential application program.

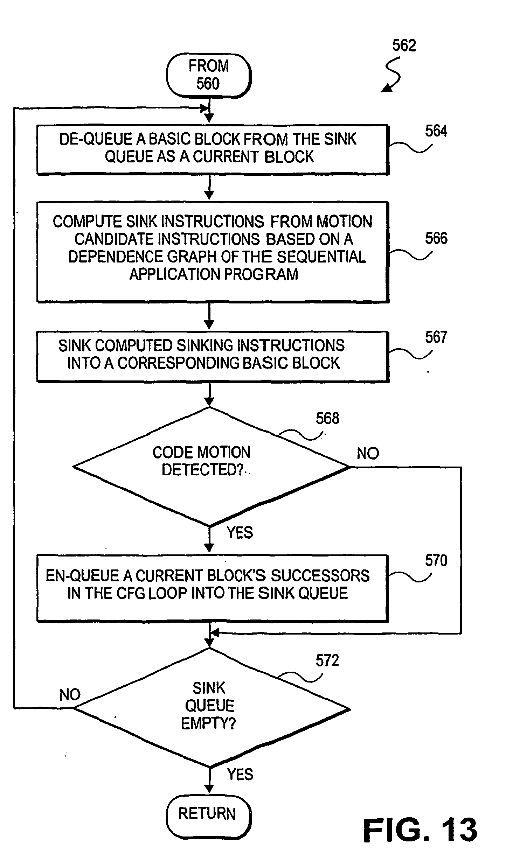

FIG. 13 is a flowchart illustrating a method 562 for sinking motion candidate instructions of process block 560 of FIG. 12, in accordance with one embodiment of the invention. At process block 564, a basic block is de-queued from the sink queue as a current block. At process block 566, sink instructions are computed for motion candidate instructions identified within the basic blocks, based on a dependence graph of the sequential application program, to maintain sequential semantics of the sequential application program. At process block 567, computed sink instructions are sunk into a corresponding basic block. At process block 570, a current block's successors in the CFG are enqueued into the sink queue if a code motion change is detected at process block 568, as a result of sinking of computed sink instructions. At process block 572, process blocks 564-570 are repeated until the sink queue is empty.

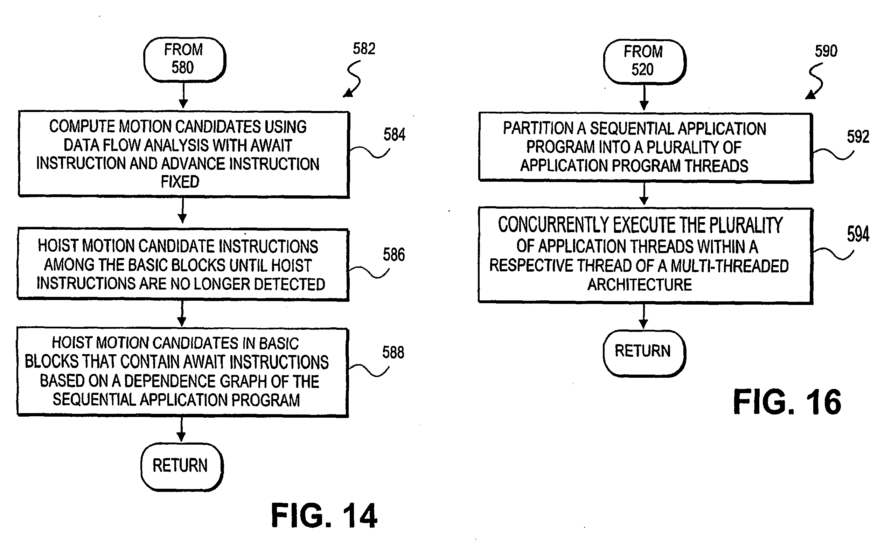

FIG. 14 is a flowchart illustrating a method 582 for hoisting motion candidate instructions with AWAIT instructions and ADVANCE instructions fixed of process block 580 of FIG. 8, in accordance with one embodiment of the invention. At process block 584, motion candidate instructions are detected from the basic blocks using dataflow analysis with AWAIT operations and ADVANCE operations fixed. In one embodiment, motion candidates are computed according to the dataflow analysis described above.

In one embodiment, a host queue is initialized with basic blocks of the CFG. In one embodiment, the basic blocks are ordered based on a topological order in the CFG. At process block 586, motion candidate instructions are hoisted among the basic blocks until hoist instructions are no longer detected. At process block 588, detected hoist instructions are hoisted within basic blocks that contain AWATT instructions based on a dependence graph of the sequential application program to preserve the original program order.

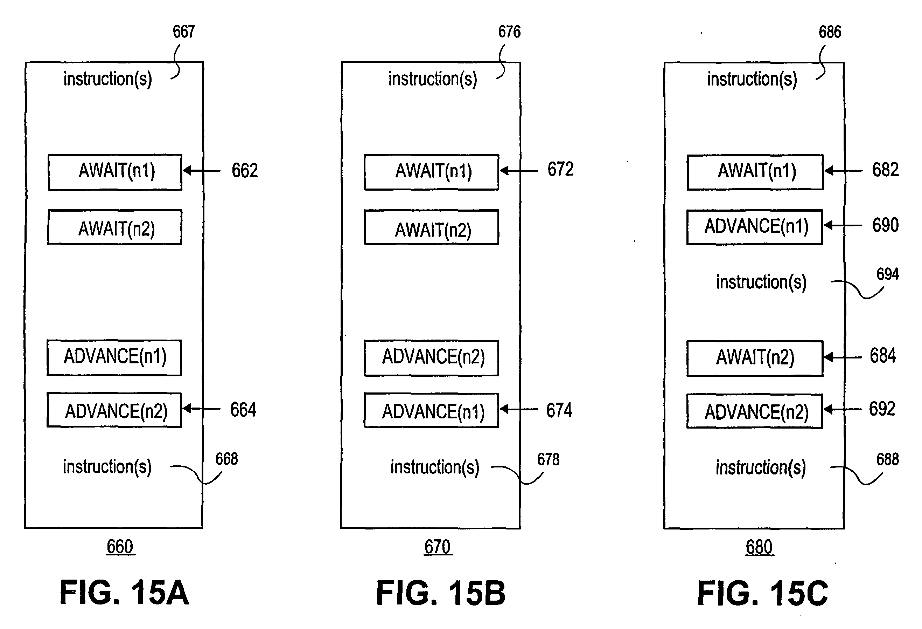

In one embodiment, process block 588 describes intra-block hoisting. In such an embodiment, motion candidates, excluding both AWAIT operations and ADVANCE operations, are hoisted in the basic blocks, which contain AWAIT operations as high as possible without violating the dependence graph. In one embodiment, an instruction that is hoisted outside of an outmost critical section is no longer regarded as a motion candidate. For example, as illustrated with reference to FIGS. 15A-15C instructions (667/668), which are hoisted or sunk outside an outmost ADVANCE operation 664 or outmost AWATT operation 662, are no longer considered as either sink candidates or hoist candidates.

Once code motion is performed on the CFG, a modified CFG is formed, which may be used to form program-threads of a parallel version of the sequential application program.

FIG. 16 is a flowchart illustrating a method 590 for partitioning a sequential application program into a plurality of application program partition threads, in accordance with one embodiment of the invention. At process block 592, the modified control flow graph of process block 520 (FIG. 5) is used to form program-threads of a sequential application program. Once formed, at process block 594, the plurality of program-threads are concurrently executed within a respective thread of a multi-thread architecture. In one embodiment, concurrent execution of program-threads is illustrated with reference to FIG. 4.

Accordingly, in one embodiment, a thread-partition compiler provides automatic multi-thread transformation of a sequential application program using a three-phase code motion to achieve increased parallelism. Within a multi-threaded architecture, only one thread is alive at any one time. Hence, line rate of a network packet processing stage can be highly improved by hiding memory latency in one thread by overlapping memory access with computations or their memory accesses performed by another thread.

Alternate Embodiments

Several aspects of one implementation of the thread-partition compiler for providing multiple program-threads have been described. However, various implementations of the thread-partition compiler provide numerous features including, complementing, supplementing, and/or replacing the features described above. Features can be implemented as part of the compiler or as part of a hardware/software translation process in different embodiment implementations. In addition, the foregoing description, for purposes of explanation, used specific nomenclature to provide a thorough understanding of the embodiments of the invention. However, it will be apparent to one skilled in the art that the specific details are not required to practice the embodiments of the invention.

In addition, although an embodiment described herein is directed to a thread-partition compiler, it will be appreciated by those skilled in the art that the embodiments of the present invention can be applied to other systems. In fact, data analysis or graph theory techniques for performing code motion within critical sections fall within the embodiments of the present invention, as defined by the appended claims. The embodiments described above were chosen and described to best explain the principles of the embodiments of the invention and its practical applications. These embodiments were chosen to thereby enable others skilled in the art to best utilize the invention and various embodiments with various modifications as are suited to the particular use contemplated.

It is to be understood that even though numerous characteristics and advantages of various embodiments of the present invention have been set forth in the foregoing description, together with details of the structure and function of various embodiments of the invention, this disclosure is illustrative only. In some cases, certain subassemblies are only described in detail with one such embodiment. Nevertheless, it is recognized and intended that such subassemblies may be used in other embodiments of the invention. Changes may be made in detail, especially matters of structure and management of parts within the principles of the embodiments of the present invention to the full extent indicated by the broad general meaning of the terms in which the appended claims are expressed.

Having disclosed exemplary embodiments and the best mode, modifications and variations may be made to the disclosed embodiments while remaining within the scope of the embodiments of the invention as defined by the following claims.

**Claims**

1. A method of operating a computer system, the steps performed by the system comprising:

a compiler building (502) a control flow graph, CFG, for a loop body of a sequential application program;

**characterised by**:-

the compiler updating (510) nodes of the CFG to enclose identifies critical sections of the sequential application program within pairs of await and advance boundary instructions that are placed, respectively, at a top and at a bottom of each CFG node; and
the compiler modifying (520) nodes of the CFG to reduce an amount of instructions between corresponding pairs of boundary instructions to form a modified CFG, which modifying is performed by:

hoisting (524) identified motion candidate instructions within the nodes of the CFG using code motions with fixed await boundary instructions;

sinking (552) identified motion candidate instructions within the nodes of the CFG using code motion with fixed advance instructions; and

hoisting (580) identified motion candidate instructions within the nodes of the CFG with fixed await instructions and fixed advance instructions;

the compiler forming a plurality of application program thread partitions from the modified CFG; and
the system concurrently executing the plurality of application program threads within a respective thread of a multi-threaded architecture.

2. The method of claim 1, wherein updating the CFG comprises:

selecting (512) an identified critical section of the sequential application program;
inserting (514) an await instructions within a top node of the CFG;
inserting 516) an advance instruction within a bottom node of the CFG; and
repeating (518) the selecting, inserting and inserting for each identified critical section of the sequential application program.

3. The method of claim 1, wherein hoisting detected hoist instructions with fixed await instructions comprises:

identifying (528) every instruction within a basic block of the CFG, excluding await instructions, as a motion candidate instructions;
building (530) an inverse graph of the CFG;
initialising (532) a hoist queue with the basic blocks from the CFG, the basic blocks ordered according to a topological order indicated by the inverse graph;
hoisting (534) motion candidate instructions of the basic blocks until hoist instructions are no longer detected from the motion candidate instructions; and
hoisting (551) detected hoist instructions from motion candidate instructions in a source basic of the CFG according to a dependence graph of the sequential application program.

4. The method of claim 3, wherein hoisting detected hoist instructions from the motion candidate instructions of the basic blocks comprises:

de-queuing a basic block from the hoist queue as a current block;
computing hoist instructions from the motion candidate instructions of the basic blocks based on a dependence graph of the sequential application program;
hoisting the computed hoist instructions into a corresponding basic block; and
enqueuing the current block's predecessors from the CFG into the hoist queue when a change is detected.

5. The method of claim 3, wherein sinking detected sink instructions with fixed advance instructions comprises:

identifying motion candidate instructions within the basic blocks of the CFG through dataflow analysis with fixed advance instructions;
initialising a sink queue with the basic blocks ordered based on a topological order in the CFG;
sinking detected sink instructions among the basic blocks until sinking instructions are no longer detected; and
sinking detected motion candidates within basic blocks that contain advance instructions according to the dependence graph.

6. The method of claim 5, wherein sinking detected sink instructions among the basis blocks comprises:

de-queue (538) a basic block from the sink queue as a current block;
computing (540) sink instructions from motion candidate instructions based on a dependence graph of the sequential application program;
sinking (542) computed sink instructions into a corresponding basic block; and
en-queuing (546) a current block's successors in the CFG into the sink queue if a change is detected.

7. The method of claim 1, wherein performing instruction hoisting with both the await instructions and advance instructions fixed, comprises:

initialising a hoist queue with the basic blocks ordered based on a topological order in the CFG;
identifying motion candidate instructions within the basic blocks of the CFG through dataflow analysis with fixed advance instructions and fixed await instructions;
hoisting detected hoist instructions among the basic blocks until hoist instructions are no longer detected; and
hoist motion candidates within basic blocks that contain await instructions based on a dependence graph of the sequential application program.

8. The method of claim 7, wherein motion candidate instructions hoisted out of an outmost await instruction are no longer treated as motion candidates; and
wherein motion candidate instructions out ot an outmost advance instruction are no longer treated as motion candidates.

9. An apparatus, comprising:

a processor (110);
a memory (140) coupled to the processor; and
a compiler (200) to cause a partition of a sequential application program into a plurality of application program-threads to enable concurrent execution of the plurality of program-threads within a respective thread of a multi-threaded architecture; wherein
the compiler (200) is adapted to cause building a control flow graph, CFG, for a loop body of a sequential application program;

**characterised in that**:

the compiler (200) is adapted to cause an update of nodes of the CFG to enclose identified critical sections of the sequential application program within pairs of await and advance boundary instructions that are placed, respectively, at a top and at a bottom of each CFG node, and the compiler (200) is adapted to cause modification of nodes of the CFG to reduce an amount of instructions between corresponding pairs of bonding instructions to form a modified CFG by:

causing hoisting identified motion candidate instructions within the nodes of the CFG using code motions with fixed await boundary instructions;
causing sinking of identified motion candidate instructions within the nodes of the CFG using code motion with fixed advance instructions; and
causing hoisting of motion candidate instructions within the nodes of the CFG with fixed await instructions and fixed advance instructions;

wherein
the compiler (200) is adapted to form a plurality of application program thread partitions from the modified CFG; and
the apparatus (100) is adapted to concurrently execute the plurality of application program threads, within a respective thread of a multi-threaded architecture.

10. An article of manufacture including a machine readable medium having stored thereon instructions which when executed by a computer system (100) perform all of the steps of a method as claimed in any one of claims 1 to 8.

**Patentansprüche**

1. Verfahren zum Betrieb eines Computersystems, das Schritte ausführt, in denen
ein Compiler für einen Schleifenkörper eines sequenziellen Anwendungsprogramms ein Steuerflussdiagram, CFG, aufbaut (502),
**dadurch gekennzeichnet, dass**
der Compiler Knoten des CFG aktualisiert (510), um erkannte kritische Abschnitte des sequenziellen Anwendungsprogramms in Paare von Warte- und Fortsetzungs-Grenzanweisungen zu setzen, die entsprechenderweise am Anfang und am Ende eines jeweiligen CFG-Knotens angeordnet werden, und
der Compiler Knoten des CFG modifiziert (520), um die Menge an Anweisungen zwischen entsprechenden Paaren der Grenzanweisungen zu verringern und ein modifiziertes CFG zu bilden, wobei das Modifizieren ausgeführt wird, indem

identifizierte Bewegungskandidatanweisungen innerhalb der Knoten des CFG unter Verwendung von Code-Bewegungen mit festen Wartegrenzanweisungen angehoben werden (524),
identifizierte Bewegungskandidatanweisungen innerhalb der Knoten des CFG unter Verwendung von Code-Bewegungen mit festen Fortsetzungsanweisungen abgesenkt werden (552), und
identifizierte Bewegungskandidatanweisungen innerhalb der Knoten des CFG mit festen Warteanweisungen und festen Fortsetzungsanweisungen angehoben werden (580),

der Compiler aus dem modifizierten CFG mehrere Anwendungsprogramm-Thread-Abteilungen bildet und
das System die mehreren Anwendungsprogramm-Threads gleichzeitig innerhalb eines jeweiligen Threads einer Multithread-Architektur ausführt.

2. Verfahren nach Anspruch 1, wobei das Aktualisieren des CFG Folgendes umfasst:

Auswählen (512) eines identifizierten kritischen Abschnitts des sequenziellen Anwendungsprogramms,
Einfügen (514) einer Warteanweisung innerhalb eines Anfangsknotens des CFG,
Einfügen (516) einer Fortsetzungsanweisung innerhalb eines Endknotens des CFG und
Wiederholen (518) des Auswählens, Einfügens und wiederum Einfügens für jeden identifizierten kritischen Abschnitt des sequenziellen Anwendungsprogramms.

3. Verfahren nach Anspruch 1, wobei das Anheben erkannter Anhebeanweisungen mit festen Warteanweisungen Folgendes umfasst:

Identifizieren (528) jeder Anweisung innerhalb eines Grundblocks des CFG mit Ausnahme von Warteanweisungen als Bewegungskandidatanweisungen,
Bauen (530) eines inversen Diagrams des CFG,
Initialisieren (532) einer Anhebeschlange mit den Grundblöcken aus dem CFG, wobei die Grundblöcke entsprechend einer vom inversen Diagram angegebenen topologischen Reihenfolge geordnet werden,
Anheben (534) von Bewegungskandidatanweisungen der Grundblöcke, bis keine Anhebeanweisungen mehr erkannt werden, aus den Bewegungskandidatanweisungen, und
Anheben (551) erkannter Anhebeanweisungen aus den Bewegungskandidatanweisungen in einem Quellgrundblock des CFG entsprechend einem Abhängigkeitsdiagram des sequenziellen Anwendungsprogramms.

4. Verfahren nach Anspruch 3, wobei das Anheben erkannter Anhebeanweisungen aus den Bewegungskandidatanweisungen der Grundblöcke Folgendes umfasst:

Entnehmen eines Grundblocks aus der Anhebeschlange als gegenwärtigen Block,
Berechnen von Anhebeanweisungen aus den Bewegungskandidatanweisungen der Grundblöcke aufgrund eines Abhängigkeitsdiagrams des sequenziellen Anwendungsprogramms,
Anheben der berechneten Anhebeanweisungen in einen entsprechenden Grundblock und
Einfügen der Vorläufer des gegenwärtigen Blocks aus dem CFG in die Anhebeschlange, wenn eine Änderung erkannt wird.

5. Verfahren nach Anspruch 3, wobei das Absenken erkannter Absenkanweisungen mit festen Fortsetzungsanweisungen Folgendes umfasst:

Identifizieren von Bewegungskandidatanweisungen innerhalb der Grundblöcke des CFG durch Datenflussanalyse mit festen Fortsetzungsanweisungen,
Initialisieren einer Absenkschlange mit den Grundblöcken, die aufgrund einer topologischen Reihenfolge im CFG geordnet werden,
Absenken erkannter Absenkanweisungen unter den Grundblöcken bis keine Absenkanweisungen mehr erkannt werden, und
Absenken erkannter Bewegungskandidaten innerhalb von Grundblöcken, die Fortsetzungsanweisungen enthalten, entsprechend dem Abhängigkeitsdiagram.

6. Verfahren nach Anspruch 5, wobei das Absenken erkannter Absenkanweisungen unter den Grundblöcken Folgendes umfasst:

Entnehmen (538) eines Grundblocks aus der Absenkschlange als gegenwärtigen Block,

Berechnen (540) von Absenkanweisungen aus Bewegungskandidatanweisungen aufgrund eines Abhängigkeitsdiagrams des sequenziellen Anwendungsprogramms,
Absenken (542) berechneter Absenkanweisungen in einem entsprechenden Grundblock und
Einfügen (546) von Nachfolgern des gegenwärtigen Blocks im CFG in die Absenkschlange, wenn eine Änderung erkannt wird.

7. Verfahren nach Anspruch 1, wobei das Anheben von Anweisungen, bei dem sowohl die Warteanweisungen als auch die Fortsetzungsanweisungen fest sind, Folgendes umfasst:

Initialisieren einer Anhebeschlange mit Grundblöcken, die aufgrund einer topologischen Reihenfolge im CFG geordnet werden,
Identifizieren von Bewegungskandidatanweisungen innerhalb der Grundblöcke des CFG durch Datenflussanalyse mit festen Fortsetzungsanweisungen und festen Warteanweisungen,
Anheben erkannter Anhebeanweisungen unter den Grundblöcken, bis keine Anhebeanweisungen mehr erkannt werden, und
Anheben von Bewegungskandidaten innerhalb von Grundblöcken, die Warteanweisungen enthalten, aufgrund eines Abhängigkeitsdiagrams des sequenziellen Anwendungsprogramms.

8. Verfahren nach Anspruch 7, wobei Bewegungskandidatanweisungen, die aus einer äußersten Warteanweisung angehoben werden, nicht mehr als Bewegungskandidaten behandelt werden und
Bewegungskandidatanweisungen außerhalb einer äußersten Fortsetzunganweisung nicht mehr als Bewegungskandidaten behandelt werden.

9. Vorrichtung aufweisend:

einen Prozessor (110),
einen mit dem Prozessor gekoppelten Speicher (140), und
einen Compiler (200), um ein sequenzielles Anwendungsprogramm in mehrere Anwendungsprogramm-Threads zu unterteilen und die gleichzeitige Ausführung der Programm-Threads innerhalb eines jeweiligen Threads einer Multithread-Architektur zu ermöglichen, wobei
der Compiler (200) eingerichtet ist, einen Aufbau eines Steuerflussdiagrams, CFG, für einen Schleifenkörper eines sequenziellen Anwendungsprogramms zu bewirken,

**dadurch gekennzeichnet, dass**
der Compiler (200) eingerichtet ist, eine Aktualisierung von Knoten des CFG zu bewirken, so dass identifizierte kritische Abschnitte des sequenziellen Anwendungsprogramms in Paare von Warte- und Fortsetzungs-Grenzanweisungen gesetzt werden, die entsprechenderweise am Anfang und am Ende eines jeweiligen CFG-Knotens angeordnet werden, und der Compiler (200) eingerichtet ist, eine Modifizierung der Knoten des CFG zu bewirken, um die Menge an Anweisungen zwischen entsprechenden Paaren von Grenzanweisungen zu verringern und ein modifiziertes CFG zu bilden, indem:

ein Anheben identifizierter Bewegungskandidatanweisungen innerhalb der Knoten des CFG unter Verwendung von Code-Bewegungen mit festen Wartegrenzanweisungen bewirkt wird,
ein Absenken identifizierter Bewegungskandidatanweisungen innerhalb der Knoten des CFG unter Verwendung von Code-Bewegungen mit festen Fortsetzungsanweisungen bewirkt wird und
ein Anheben von Bewegungskandidatanweisungen innerhalb der Knoten des CFG mit festen Warteanweisungen und festen Fortsetzungsanweisungen bewirkt wird,

wobei
der Compiler (200) eingerichtet ist, aus dem modifizierten CFG mehrere Anwendungsprogramm-Thread-Abteilungen zu bilden, und
die Vorrichtung (100) eingerichtet ist, die mehreren Anwendungsprogramm-Threads gleichzeitig innerhalb eines jeweiligen Threads einer Multithread-Architektur auszuführen.

10. Erzeugnis mit einem maschinenlesbaren Medium, auf dem Anweisungen gespeichert sind, die bei Ausführung durch ein Computersystem (100) alle Schritte eines Verfahrens nach einem der Ansprüche 1 bis 8 ausführen.

**Revendications**

1. Procédé de mise en oeuvre d'un système informatique, les étapes effectuées par le système comprenant :

   la construction (502) par un compilateur d'un organigramme de commande (CFG), pour un corps de boucle d'un programme séquentiel d'application;

   **caractérisé :**

   **en ce que** le compilateur met à jour (510) des noeuds du CFG pour enfermer des sections critiques identifiées du programme séquentiel d'application à l'intérieur de paires d'instructions de limite d'attente et d'avancée qui sont placées, respectivement, au sommet et à la base de chaque noeud de CFG ; et
   **en ce que** le compilateur modifie (520) des noeuds du CFG pour réduire la quantité d'instructions entre des paires correspondantes d'instructions de limite pour former un CFG modifié, laquelle modification se fait :

   en faisant monter (524) des instructions identifiées candidates au déplacement à l'intérieur des noeuds du CFG en utilisant des déplacements de code avec des instructions fixes de limite d'attente ;
   en faisant descendre (552) des instructions identifiées candidates au déplacement à l'intérieur des noeuds du CFG en utilisant un déplacement de code avec des instructions fixes d'avancée ; et
   en faisant monter (580) des instructions identifiées candidates au déplacement à l'intérieur des noeuds du CFG avec des instructions fixes d'attente et des instructions fixes d'avancée ;

   **en ce que** le compilateur forme une pluralité de partitions en unités d'exécution de programme d'application à partir du CFG modifié ; et
   **en ce que** le système exécute en même temps la pluralité d'unités d'exécution de programme d'application à l'intérieur d'une unité d'exécution respective d'une architecture multi-unités d'exécution.

2. Procédé selon la revendication 1, dans lequel la mise à jour du CFG comprend :

   le choix (512) d'une section critique identifiée du programme séquentiel d'application ;
   l'insertion (514) d'une instruction d'attente à l'intérieur d'un noeud au sommet du CFG ;
   l'insertion (516) d'une instruction d'avancée à l'intérieur d'un noeud à la base du CFG ; et
   la répétition (518) du choix, de l'insertion et de l'insertion pour chaque section critique identifiée du programme séquentiel d'application.

3. Procédé selon la revendication 1, dans lequel la montée d'instructions détectées de montée avec des instructions fixes d'attente comprend :

   l'identification (528) de chaque instruction à l'intérieur d'un bloc de base du CFG, en excluant les instructions d'attente, comme instructions candidates au déplacement ;
   la construction (530) d'un organigramme inverse du CFG ;
   l'initialisation (532) d'une file d'attente de montée avec les blocs de base provenant du CFG, les blocs de base étant ordonnés d'après un ordre topologique indiqué par l'organigramme inverse ;
   la montée (534) d'instructions candidates au déplacement des blocs de base jusqu'à ce que l'on ne détecte plus d'instructions de montée à partir des instructions candidates au déplacement ;
   la montée (551) d'instructions détectées de montée à partir d'instructions candidates au déplacement dans une source de base du CFG en fonction d'un organigramme de dépendance du programme séquentiel d'application.

4. Procédé selon la revendication 3, dans lequel la montée d'instructions détectées de montée à partir des instructions candidates au déplacement des blocs de base comprend :

   la sortie de file d'attente, de la file d'attente de montée, d'un bloc de base en tant que bloc en cours ;
   le traitement d'instructions de montée à partir des instructions candidates au déplacement des blocs de base, en se basant sur un organigramme de dépendance du programme séquentiel d'application ;
   la montée des instructions traitées de montée à l'intérieur d'un bloc de base correspondant ; et
   la mise en file d'attente des prédécesseurs du bloc en cours du CFG dans la file d'attente de montée lorsqu'un changement est détecté.

**5.** Procédé selon la revendication 3, dans lequel la descente d'instructions détectées de descente avec des instructions fixes d'avancée comprend :

l'identification d'instructions candidates au déplacement à l'intérieur des blocs de base du CFG au moyen d'une analyse de flux de données avec des instructions fixes d'avancée ;

l'initialisation d'une file d'attente de descente avec les blocs de base ordonnés en se basant sur un ordre topologique dans le CFG ;

la descente d'instructions détectées de descente parmi les blocs de base jusqu'à ce que l'on ne détecte plus d'instructions de descente ; et

la descente de candidates détectées au déplacement à l'intérieur des blocs de base qui contiennent des instructions d'avancée d'après l'organigramme de dépendance.

**6.** Procédé selon la revendication 5, dans lequel la descente d'instructions détectées de descente parmi les blocs de base comprend :

la sortie de file d'attente (538), de la file d'attente de descente, d'un bloc de base en tant que bloc en cours ;

le traitement (540) d'instructions de descente à partir des instructions candidates au déplacement en se basant sur un organigramme de dépendance du programme séquentiel d'application ;

la descente (542) des instructions traitées de descente à l'intérieur d'un bloc de base correspondant ; et

la mise en file d'attente des successeurs du bloc en cours du CFG dans la file d'attente de descente si un changement est détecté.

**7.** Procédé selon la revendication 1, dans lequel l'exécution de la montée d'instructions avec à la fois les instructions d'attente et les instructions d'avancée qui sont fixées, comprend :

l'initialisation d'une file d'attente de montée avec les blocs de base ordonnés en se basant sur un ordre topologique dans le CFG ;

l'identification d'instructions candidates au déplacement à l'intérieur des blocs de base du CFG au moyen d'une analyse de flux de données avec des instructions fixes d'avancée et des instructions fixes d'attente ;

la montée d'instructions détectées de montée parmi les blocs de base jusqu'à ce que l'on ne détecte plus d'instructions de montée ; et

la montée de candidates au déplacement à l'intérieur des blocs de base qui contiennent des instructions d'attente en se basant sur un diagramme de dépendance du programme séquentiel d'application.

**8.** Procédé selon la revendication 7, dans lequel les instructions candidates au déplacement que l'on a fait monter d'une instruction d'attente le plus à l'extérieur ne sont plus traitées comme candidates au déplacement ; et dans lequel les instructions candidates au déplacement provenant d'une instruction d'avancée le plus à l'extérieur ne sont plus traitées comme candidates au déplacement.

**9.** Appareil, comprenant :

un processeur (110) ;

une mémoire (140) associée au processeur ; et

un compilateur (200) pour provoquer une partition d'un programme séquentiel d'application en une pluralité d'unités d'exécution de programme d'application pour permettre l'exécution en même temps de la pluralité d'unités d'exécution de programme à l'intérieur d'une unité d'exécution respective d'une architecture multi-unités d'exécution ;

dans lequel le compilateur (200) est apte à provoquer la construction d'un organigramme de commande, CFG, pour un corps de boucle d'un programme séquentiel d'application ;

**caractérisé :**

**en ce que** le compilateur (200) est apte à provoquer une mise à jour des noeuds du CFG pour enfermer des sections critiques identifiées du programme séquentiel d'application à l'intérieur de paires d'instructions de limite d'attente et d'avancée qui sont placées, respectivement, au sommet et à la base de chaque noeud de CFG, et en ce que le compilateur (200) est apte à provoquer une modification des noeuds du CFG pour réduire la quantité d'instructions entre des paires correspondantes d'instructions de limite pour former un CFG modifié :

en provoquant la montée d'instructions identifiées candidates au déplacement à l'intérieur des noeuds du CFG en utilisant des déplacements de code avec des instructions fixes de limite d'attente ;
en provoquant la descente d'instructions identifiées candidates au déplacement à l'intérieur des noeuds du CFG en utilisant un déplacement de code avec des instructions fixes d'avancée ; et
en provoquant la montée d'instructions identifiées candidates au déplacement à l'intérieur des noeuds du CFG avec des instructions fixes d'attente et des instructions fixes d'avancée ;

**en ce que** le compilateur (200) est apte à former une pluralité de partitions en unités d'exécution de programme d'application à partir du CFG modifié ; et
**en ce que** l'appareil (100) est apte à exécuter en même temps la pluralité d'unités d'exécution de programme d'application à l'intérieur d'une unité d'exécution respective d'une architecture multi-unités d'exécution.

10. Article manufacturé incluant un support lisible en machine sur lequel sont mémorisées des instructions qui, lorsqu'elles sont exécutées par un système informatique (100), effectuent toutes les étapes d'un procédé selon l'une quelconque des revendications 1 à 8.

**FIG. 1**

```
void PPS_fun()
{
    i = 0;
    //the PPS loop          282
    for (;;)
    {
        u(i);              }
        i = d();           } 284
286     }
}

                          280
```

**FIG. 2A**

```
void
PPS_fun_thread_0()
{
    for (;;)
    {
        wait for thread 1
302     u(i);
        i = d();
        inform thread 1
304 }
}

                          300-1
```

**FIG. 2B**

```
void
PPS_fun_thread_1()
{
    i = 0;           316
    inform thread 0          318
    for (;;)
    {
        wait for thread 0
312     u(i);
        i = d();
        inform thread 0
314 }
}

                          300-2
```

**FIG. 2C**

EP 1 683 010 B1

```
Void PPS_fun_thread_0()

{
    for (;;)
    {
        AWAIT(n)   ~322
        u(i);
        i = d();
        ADVANCE(n)   ~324
    }
}
                              300-1
```

**FIG. 3A**

```
Void PPS_fun_thread_1()

{
    i = 0;   ~326
    ADVANCE(n)   ~328
    for (;;)
    {
        AWAIT(n)   ~332
        u(i);
        i = d();
        ADVANCE(n)   ~334
    }
}
                              300-2
```

**FIG. 3B**

PROGRAM
THREAD
300-1

• • •

PROGRAM
THREAD
300-2

410-1

410-N

SYNCHRONIZATION
BLOCK      420

NP
400

# FIG. 4

500

START

↓

BUILD A CONTROL FLOW GRAPH (CFG) FOR A LOOP BODY OF A SEQUENTIAL APPLICATION PROGRAM TO FORM A CFG LOOP — 502

↓

UPDATE NODES OF THE CFG LOOP TO ENCLOSE IDENTIFIED CRITICAL SECTIONS OF THE SEQUENTIAL APPLICATION PROGRAM WITHIN PAIRS OF BOUNDARY INSTRUCTIONS — 510

↓

MODIFY NODES OF THE CFG LOOP TO REDUCE AN AMOUNT OF INSTRUCTIONS BETWEEN CORRESPONDING PAIRS OF BONDING INSTRUCTIONS TO FORM A MODIFIED CFG LOOP — 520

↓

END

# FIG. 5

602

1

603

604

2

605

608

604

2

605

606

3

606

3

600

610

# FIG. 6A

# FIG. 6B

511

FROM
510

SELECT AN IDENTIFIED CRITICAL SECTION
OF THE SEQUENTIAL APPLICATION PROGRAM — 512'

INSERT AN AWAIT INSTRUCTION WITHIN A
TOP NODE OF THE CFG LOOP — 514

INSERT AN ADVANCE INSTRUCTION WITHIN
A BOTTOM NODE OF THE CFG LOOP — 516

518

NO | CRITICAL
SECTIONS
PROCESSED?

YES

RETURN

**FIG. 7**

522

FROM
520

HOIST MOTION CANDIDATE INSTRUCTIONS WITHIN
THE NODES OF THE CFG LOOP USING CODE
MOTIONS WITH FIXED AWAIT
INSTRUCTIONS — 524

SINK MOTION CANDIDATE INSTRUCTIONS WITHIN
THE NODES OF THE CFG LOOP USING CODE
MOTION WITH FIXED ADVANCE INSTRUCTIONS — 552

HOIST MOTION CANDIDATE INSTRUCTIONS WITHIN
THE NODES OF THE CFG LOOP WITH FIXED
AWAIT INSTRUCTIONS AND
FIXED ADVANCE INSTRUCTIONS — 580

RETURN

**FIG. 8**

EP 1 683 010 B1

526

FROM
524

IDENTIFY EVERY INSTRUCTION WITHIN A BASIC
BLOCK OF THE CFG LOOP, EXCLUDING
AWAIT INSTRUCTIONS, AS A MOTION
CANDIDATE INSTRUCTIONS

528

BUILD AN INVERSE GRAPH OF THE CFG
LOOP

530

INITIALIZE A HOIST QUEUE WITH THE BASIC
BLOCKS FROM THE CFG LOOP,
ORDERED ACCORDING TO A
TOPOLOGICAL ORDER INDICATED BY THE
INVERSE GRAPH

532

HOIST MOTION CANDIDATES OF THE
BASIC BLOCKS OF THE CFG LOOP

534

550

HOIST
INSTRUCTIONS NO
LONGER NEEDED?

NO

YES

HOIST MOTION CANDIDATE INSTRUCTIONS IN A
SOURCE BASIC BLOCK OF THE CFG LOOP
ACCORDING TO A DEPENDENCE GRAPH OF
THE SEQUENTIAL APPLICATION PROGRAM

551

RETURN

FIG. 9

630 ~⌐ AWAIT(n)    <u>620</u>

flow dependence

640 ~⌐ ACCESS(I)

flow dependence

650 ~⌐ ADVANCE(n)

# FIG. 10

536

```
┌─────────────┐
│   FROM      │
│   534       │
└─────────────┘
```

DE-QUEUING A BASIC BLOCK FROM THE HOIST QUEUE AS A CURRENT BLOCK — 538

COMPUTE HOIST INSTRUCTIONS FROM THE MOTION CANDIDATE INSTRUCTIONS OF THE BASIC BLOCKS BASED ON A DEPENDENCE GRAPH OF THE SEQUENTIAL APPLICATION PROGRAM — 540

HOIST THE COMPUTED HOIST INSTRUCTIONS INTO A CORRESPONDING BASIC BLOCK — 542

544

CODE MOTION DETECTED?   NO

YES

ENQUEUE THE CURRENT BLOCK'S PREDECESSORS FROM THE CFG LOOP INTO THE HOIST QUEUE — 546

548

NO   HOIST QUEUE EMPTY?

YES

```
┌─────────────┐
│   RETURN    │
└─────────────┘
```

**FIG. 11**

554

```
┌─────────┐
│  FROM   │
│  552    │
└─────────┘
     │
     ▼
```

| IDENTIFY MOTION CANDIDATE INSTRUCTIONS WITHIN BASIC BLOCKS OF THE CFG LOOP THROUGH DATA FLOW ANALYSIS | 556 |

| INITIALIZE A SINK QUEUE WITH THE BASIC BLOCKS FROM THE CFG LOOP, ORDERED ACCORDING TO A TOPOLOGICAL ORDER INDICATED BY THE CFG LOOP | 558 |

| SINK MOTION CANDIDATES OF THE BASIC BLOCKS OF THE CFG LOOP | 560 |

574

SINK INSTRUCTIONS NO LONGER NEEDED?

NO

YES

| SINK MOTION CANDIDATE INSTRUCTIONS WITHIN BASIC BLOCKS CONTAINING ADVANCE INSTRUCTION ACCORDING TO A DEPENDENCE GRAPH OF THE SEQUENTIAL APPLICATION PROGRAM | 576 |

```
┌─────────┐
│ RETURN  │
└─────────┘
```

# FIG. 12

562

FROM
560

DE-QUEUE A BASIC BLOCK FROM THE SINK
QUEUE AS A CURRENT BLOCK — 564

COMPUTE SINK INSTRUCTIONS FROM MOTION
CANDIDATE INSTRUCTIONS BASED ON A
DEPENDENCE GRAPH OF THE SEQUENTIAL
APPLICATION PROGRAM — 566

SINK COMPUTED SINKING INSTRUCTIONS
INTO A CORRESPONDING BASIC BLOCK — 567

568
CODE MOTION
DETECTED? — NO

YES

EN-QUEUE A CURRENT BLOCK'S SUCCESSORS
IN THE CFG LOOP INTO THE SINK QUEUE — 570

572
SINK
QUEUE
EMPTY? — NO

YES

RETURN

**FIG. 13**

FROM
580

582

COMPUTE MOTION CANDIDATES USING
DATA FLOW ANALYSIS WITH AWAIT
INSTRUCTION AND ADVANCE INSTRUCTION
FIXED

584

HOIST MOTION CANDIDATE INSTRUCTIONS
AMONG THE BASIC BLOCKS UNTIL HOIST
INSTRUCTIONS ARE NO LONGER DETECTED

586

HOIST MOTION CANDIDATES IN BASIC
BLOCKS THAT CONTAIN AWAIT INSTRUCTIONS
BASED ON A DEPENDENCE GRAPH OF THE
SEQUENTIAL APPLICATION PROGRAM

588

RETURN

FIG. 14

FROM
520

590

PARTITION A SEQUENTIAL APPLICATION
PROGRAM INTO A PLURALITY OF
APPLICATION PROGRAM THREADS

592

CONCURRENTLY EXECUTE THE PLURALITY
OF APPLICATION THREADS WITHIN A
RESPECTIVE THREAD OF A MULTI-THREADED
ARCHITECTURE

594

RETURN

FIG. 16

EP 1 683 010 B1

EP 1 683 010 B1

667

instruction(s)

| AWAIT(n1) | ← 662 |

| AWAIT(n2) |

| ADVANCE(n1) |

| ADVANCE(n2) | ← 664 |

instruction(s) 668

660

**FIG. 15A**

676

instruction(s)

| AWAIT(n1) | ← 672 |

| AWAIT(n2) |

| ADVANCE(n2) |

| ADVANCE(n1) | ← 674 |

instruction(s) 678

670

**FIG. 15B**

686

instruction(s)

| AWAIT(n1) | ← 682 |

| ADVANCE(n1) | ← 690 |

instruction(s) 694

| AWAIT(n2) | ← 684 |

| ADVANCE(n2) | ← 692 |

instruction(s) 688

680

**FIG. 15C**

# EP 1 683 010 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MICHAEL WOLFE.** Multiprocessor Synchronization for Concurrent Loops. *IEEE Software USA,* January 1988, vol. 5 (1), ISSN 0740-7459, 34-42
- **STEVEN S. MUCHNICK.** Control-flow analaysis. *ADVANCED COMPILTER DESIGN AND IMPLE-MENTATION,* 1985, 169-172191
- **MICHEAL WOLFE.** Optimizing Supercompilers for Supercomputers. MIT PRESS, 1989
- **MATTHEW ADILETTA ; DONALD HOOPER ; MYLES WILDE.** Packet over SONET: Achieving 10 Gigabit/see Packet processing with an IXP2800. *Intel Technology Journal Intel Corp USA,* August 2002, vol. 6 (3), ISSN 1535-864X, 29-39
- **NOVILLO D et al.** Concurrent SSA form in the presence of mutual exclusion. *PARALLEL PROCESS-ING, 1998. PROCEEDINGS. 1998 INTERNATION-AL CONFERENCE ON MINNEAPOLIS,* 10 August 1998, ISBN 0-8186-8650-2, 356-364
- **JENS SNOOP ; OLIVER RUTHING ; BERNHARD STIFFER.** Optimal code motion: theory and practice. *ACM Transactions on Programming Languages and Systems USA,* July 1994, vol. 16 (4), ISSN 0164-0925, 1117-1155